# FASCICULE DE BREVET EUROPEEN

(11) **EP 3 804 086 B1**
(45) Date de publication et mention de la délivrance du brevet: **20.03.2024**
(21) Numéro de dépôt: 19723821.5
(22) Date de dépôt: 17.05.2019
(51) Int. Cl.: H02K 1/16, H02K 15/02, H02K 1/20, H02K 1/14, H02K 11/25

(54) **STATOR DE MACHINE ELECTRIQUE TOURNANTE**
STATOR FÜR EINE ELEKTRISCHE DREHMASCHINE
STATOR FOR A ROTATING ELECTRICAL MACHINE

(30) Priorité: 07.06.2018 FR 1854967
(43) Date de publication de la demande: 14.04.2021
(73) Titulaire: Moteurs Leroy-Somer, 16915 Angouleme (FR)
(72) Inventeur: SAINT-MICHEL, Jacques, 16000 ANGOULEME (FR); JANNOT, Xavier, 16000 ANGOULEME (FR); TURCAT, François, 16330 MONTIGNAC SUR CHARENTE (FR); PLASSE, Cédric, 16730 LINARS (FR); GAS, Olivier, 16160 GOND-PONTOUVRE (FR)
(74) Mandataire: Cabinet Nony
(86) Numéro de dépôt international: PCT/EP2019/062829
(87) Numéro de publication internationale: WO 2019/233739

(56) Documents cités:
- EP-A1- 0 587 812
- EP-B1- 0 587 812
- WO-A2-2014/074423
- DE-C- 875 227
- US-A- 6 107 718
- US-A1- 2003 006 663
- US-A1- 2003 098 628
- US-A1- 2004 021 393
- US-A1- 2004 189 136
- US-A1- 2008 191 576
- US-A1- 2011 037 338
- US-A1- 2014 339 947

## Description

La présente invention concerne les machines électriques tournantes et plus particulièrement les stators de telles machines.

Dans des stators connus, la culasse ménage des encoches totalement ouvertes ou semi-ouvertes en direction de l'entrefer, de manière à permettre l'introduction des bobinages. Généralement, les encoches semi-ouvertes reçoivent des conducteurs électriques de section transversale circulaire disposés en vrac, tandis que les encoches totalement ouvertes logent des conducteurs électriques de section transversale rectangulaire, disposés de manière rangée.

JP 2 875497 porte sur un stator de machine électrique comportant une couronne dentelée dont les tôles présentent des portions amincies dans leurs épaisseurs situées entre deux dents consécutives du côté de l'entrefer. De telles portions amincies constituent des ouvertures vers l'entrefer qui peuvent produire des perturbations électromagnétiques non négligeables, notamment une augmentation de l'entrefer « magnétique » en raison des franges de flux, des pertes fer plus élevées à la surface du rotor pour la même raison, ou encore des couples pulsatoires car les variations de perméance sont relativement brutales. En outre, les bobinages y sont bobinés sur dents.

JP 2011-097723 montre des dents individuelles rapportées sur une culasse.

La demande de brevet FR 3 019 947 décrit un stator comportant une couronne dentelée comportant des dents reliées entre elles par des ponts de matière et définissant entre elles des encoches de réception des bobines, les encoches étant ouvertes radialement vers l'extérieur. Les ouvertures des encoches sont fermées par une culasse rapportée sur la couronne dentelée.

Il existe un besoin pour bénéficier d'un stator de machine électrique tournante d'assemblage aisé permettant un remplissage efficace des encoches, tout en assurant des performances électromagnétiques satisfaisantes. Il existe également un besoin pour améliorer encore les stators de machines électriques et notamment diminuer les ondulations de couple.

### Stator

L'invention vise à répondre à ce besoin et elle y parvient, selon l'un de ses aspects, grâce à un stator de machine électrique tournante tel que défini à la revendication 1.

Les premiers et deuxièmes reliefs sont de préférence complémentaires et ils coopèrent par complémentarité de formes. Ils permettent d'immobiliser angulairement la culasse par rapport à la couronne et de maintenir la couronne et la culasse fixes l'une par rapport à l'autre, notamment circonférentiellement ainsi que de préférence radialement.

On peut obtenir une rigidification de la couronne par la culasse, ce qui peut permettre de réaliser la culasse avec des ponts de matière fins, ce qui présente de multiples avantages comme détaillé plus loin. Une telle configuration permet de minimiser l'entrefer parasite entre la culasse et la couronne.

La présence des premiers et deuxièmes reliefs permet également d'augmenter la surface de l'interface entre la couronne et la culasse, et ainsi de mieux répartir le flux circulant dans l'entrefer parasite entre la culasse et la couronne.

La coopération entre les premiers et deuxièmes reliefs et/ou avec le ou les inserts peut être totale ou partielle. Autrement dit, leur forme respective peut ne pas être exactement la même sans que l'on sorte du cadre de la présente invention. Les formes des premiers et deuxièmes reliefs peuvent ne pas être exactement complémentaires.

Le ou les inserts sont différents d'un bobinage. Le ou les inserts sont de préférence magnétiques et non conducteurs électriques.

Les ponts de matière reliant deux dents adjacentes à leur base et définissant le fond de l'encoche entre ces dents permettent la fermeture des encoches du côté de l'entrefer. Les ponts de matière et les dents sont venus d'un seul tenant avec le reste des tôles formant la couronne. La présence des encoches fermées du côté de l'entrefer permet de renforcer mécaniquement le stator et de réduire les vibrations, car l'on obtient un effet de crantage minimisé (en anglais « *cogging torque* »), les perturbations électromagnétiques étant réduites par rapport à un stator de l'art antérieur ayant des encoches ouvertes sur l'entrefer.

Par « culasse rapportée », il faut comprendre que la culasse n'est pas réalisée d'un seul tenant avec la couronne mais est fixée à cette dernière au cours de la fabrication du stator.

### Interface culasse - couronne

Les premiers reliefs de la couronne peuvent être disposés sur les dents, notamment à leur extrémité faisant face à la culasse. Les deuxièmes reliefs de la culasse peuvent être disposés sur la surface intérieure de la culasse, face aux dents de la couronne et plus particulièrement face aux premiers reliefs. Ils sont notamment décalés angulairement par rapport aux encoches de la couronne.

La culasse peut comporter des troisièmes reliefs disposés sur la surface intérieure de la culasse, face aux encoches de la couronne. Ces troisièmes reliefs sont notamment décalés par rapport aux dents de la couronne. Ces troisièmes reliefs ne sont pas configurés pour coopérer avec la couronne, lorsque la culasse est rapportée au contact de la couronne.

Ils peuvent servir au passage d'une circulation de fluide de refroidissement, par exemple à une circulation d'air, pour le refroidissement du stator.

En variante, les troisièmes reliefs peuvent servir à loger un patin de glissement des bobinages, permettant de faciliter leur introduction dans les encoches. Ces patins peuvent être laissés en place ou retirés. De tels patins peuvent être réalisés en matière plastique. Ils peuvent s'étendre sur toute la dimension axiale du stator, ou sur une longueur inférieure.

En variante encore, les troisièmes reliefs peuvent servir à loger une ou plusieurs sondes de température, ce qui peut éviter d'avoir à loger celles-ci dans les encoches, et permettre ainsi un remplissage plus homogène des encoches. Le stator comporte par exemple trois à six sondes de température.

Enfin, ces troisièmes reliefs peuvent également aider à la pénétration et à la bonne diffusion d'un vernis d'imprégnation dans le stator.

Les premiers reliefs de la couronne peuvent résulter du découpage des troisièmes reliefs de la culasse. La couronne et la culasse peuvent être découpées simultanément dans une même tôle par une découpe unique. Les premiers et troisièmes reliefs peuvent avoir une forme exactement complémentaire.

Les troisièmes reliefs peuvent avoir une forme analogue à celle des deuxièmes reliefs, mais légèrement plus grande, de façon à permettre la bonne coopération des premiers reliefs avec les deuxièmes reliefs, et notamment leur insertion aisée.

Dans un mode de réalisation, les troisièmes reliefs ont une dimension radiale supérieure à une dimension radiale des deuxièmes reliefs, par exemple de 0,1 à 20 % supérieure, mieux de 0,2 à 10% supérieure, voire de 0,3 à 5% supérieure.

Dans un mode de réalisation, les troisièmes reliefs ont une dimension circonférentielle supérieure à une dimension circonférentielle des deuxièmes reliefs, par exemple de 0,1 à 20 % supérieure, mieux de 0,2 à 10% supérieure, voire de 0,3 à 5% supérieure.

Dans le cas où les premiers et deuxièmes reliefs ont un bord au moins partiellement défini par une portion de cercle, l'écart entre les rayons des portions de cercle définissant les bords respectifs des premiers et deuxièmes reliefs peut être compris entre 2 et 20 dixièmes de millimètre, mieux entre 3 et 15, voire entre 4 et 10 dixièmes de millimètre.

Les premiers et deuxièmes reliefs peuvent avoir respectivement chacun un centre de courbure. Le centre de courbure des premiers reliefs peut être décalé vers l'axe de rotation de la machine par rapport au centre de courbure des deuxièmes reliefs, le cas échéant. Une telle configuration peut permettre lors de l'assemblage de la culasse sur la couronne qu'une traction s'exerce sur les premiers reliefs vers l'extérieur et garantisse ainsi une absence de jeu entre couronne et culasse. On peut également obtenir ainsi qu'une traction s'exerce dans les ponts de matière reliant les dents.

Les encoches de la couronne peuvent comporter des angles arrondis à proximité de la culasse.

La culasse peut comporter des entailles au niveau des extrémités des encoches de la couronne, à proximité de la culasse. Ces entailles peuvent permettre de ménager des angles arrondis dans les encoches de la couronne à proximité de la culasse, avec une découpe propre et sans bavure.

Les premiers et/ou les deuxièmes reliefs peuvent prendre une forme de portion de disque, pouvant notamment s'étendre sur une étendue angulaire d'environ 180°, ou sur une étendue angulaire supérieure à 180°, mieux supérieure à 210°, voire supérieure à 240°. L'autre des premiers et/ou des deuxièmes reliefs a alors une forme de renfoncement en forme de portion de disque, de forme correspondante.

Dans un mode de réalisation, les premiers et deuxièmes reliefs peuvent prendre chacun alternativement une forme de portion de disque ou de renfoncement en forme de portion de disque, lorsque l'on se déplace autour de l'axe de rotation de la machine. Ladite portion de disque ou le renfoncement correspondant peut s'étendre sur une étendue angulaire d'environ 180°, ou sur une étendue angulaire supérieure à 180°, mieux supérieure à 210°, voire supérieure à 240°.

En variante, tous les premiers reliefs font saillie dans des renforcements des deuxièmes reliefs. Dans un tel mode de réalisation, les premiers reliefs ont une forme de portion de disque et les deuxièmes reliefs ont une forme de renfoncement en forme de portion de disque.

Les deuxièmes reliefs peuvent avoir une forme de renfoncement dans lesquels sont disposées les extrémités des dents. Les extrémités des dents constituent dans ce cas les premiers reliefs de la couronne. Le renfoncement peut avoir une largeur sensiblement égale, notamment légèrement supérieure, à la largeur des dents au niveau de leur extrémité libre. Les extrémités libres des dents peuvent être légèrement biseautées, de façon à favoriser leur insertion dans les renfoncements de la culasse. Au niveau des extrémités libres des dents, les bords des dents peuvent aller en convergeant légèrement lorsque l'on s'éloigne de l'axe de rotation de la machine.

Les premiers et deuxièmes reliefs peuvent être configurés de telle sorte que l'interface entre la couronne et la culasse ait une forme ondulée.

Les premiers et deuxièmes reliefs peuvent avoir une forme de queue d'aronde et mortaise. La queue d'aronde peut avoir des angles arrondis. Dans un mode de réalisation, le premier relief de la couronne peut avoir une forme de queue d'aronde.

Les premiers et deuxièmes reliefs peuvent avoir une forme de clef insérée dans une cage. Les deuxièmes reliefs peuvent comporter une excroissance arrondie qui vient s'imbriquer dans une cage arrondie des premiers reliefs. La cage peut être délimitée par deux branches, lesquelles peuvent s'écarter l'une de l'autre ou non lors de l'insertion du deuxième relief. Les premiers reliefs peuvent comporter une ou plusieurs ouvertures, notamment de part et d'autre de la cage arrondie. Ces ouvertures peuvent être ménagées au milieu des branches précitées. On peut en variante insérer un outil conique aux extrémités du stator, dans l'une, plusieurs ou toutes les cages précitées, afin d'écarter les branches l'une de l'autre et obtenir une condamnation de l'assemblage culasse et couronne.

Des trous sont ménagés à l'interface entre la couronne et la culasse. Ces trous peuvent servir au passage d'une circulation de fluide de refroidissement, par exemple à une circulation d'air pour le refroidissement du stator. Ils peuvent en variante servir au passage de tirants de maintien du stator.

### Ponts de matière

Les dents ménagées entre les encoches sont reliées entre elles du côté de l'entrefer par des ponts de matière. Ainsi, chaque encoche est fermée du côté de l'entrefer par un pont de matière reliant entre elles deux dents consécutives de la masse statorique. Les ponts de matière relient chacun deux dents adjacentes à leur base du côté de l'entrefer et définissent le fond de l'encoche entre ces dents.

Les ponts de matière sont d'un seul tenant avec les dents adjacentes.

L'absence d'ouverture des encoches vers l'entrefer permet d'éviter de produire des perturbations électromagnétiques, notamment une augmentation de l'entrefer « *magnétique* » en raison des franges de flux, des pertes fer plus élevées à la surface du rotor pour la même raison, ou encore des couples pulsatoires. Les performances électromagnétiques de la machine en sont améliorées.

### Zone déformable

Au moins une partie de ces ponts de matière peut présenter au moins une zone déformable pouvant se déformer lors du montage de la culasse sur la couronne et/ou de l'insertion des bobinages dans les encoches.

Par « zone déformable », on comprend une zone du pont de matière se déformant de manière préférentielle lors d'un mouvement relatif des dents qu'il relie. La déformation du pont de matière peut se traduire par un allongement ou un raccourcissement de la dimension circonférentielle du pont de matière, ce qui entraîne un allongement ou un raccourcissement de la dimension circonférentielle de la couronne. La déformation préférentielle peut résulter d'une forme particulière donnée au pont.

La zone déformable permet de répondre aux contraintes mécaniques subies par la couronne lors de l'assemblage de la couronne avec la culasse. De plus, cela permet si on le souhaite d'avoir des encoches plus ouvertes avant montage de la culasse et donc un jeu plus important entre les bobinages et la paroi des encoches lors de l'insertion des bobines, ce qui facilite celle-ci et réduit le risque d'endommagement des isolants.

La culasse permet de fermer les encoches de la couronne et de maintenir les bobinages dans les encoches après leur insertion. Lors de la fabrication du stator, la culasse peut être assemblée avec la couronne de diverses manières. Les zones déformables des ponts de matière facilitent cet assemblage en offrant une certaine souplesse à la couronne, ce qui lui permet de s'adapter à la forme de la culasse lors du montage de cette dernière, la culasse, plus rigide, imposant sa forme.

Il est également possible d'assembler la couronne et la culasse avec un jeu entre elles, puis ensuite d'augmenter le diamètre de la couronne en la déformant grâce aux zones déformables pour réduire ce jeu.

De plus, la présence des ponts de matière réduit le risque de perte de vernis dans l'entrefer lors de l'imprégnation par un vernis du stator complet. Ceci permet de réduire le besoin de nettoyage.

Elle permet également de réduire la fuite du vernis dans l'entrefer pendant le fonctionnement e la machine sur laquelle le stator est monté. Ceci simplifie la maintenance de la machine.

Le terme « vernis » doit ici s'entendre avec un sens large et couvre tout type de matériau d'imprégnation, notamment polymère.

La zone déformable forme, de préférence, un jeu entre le pont de matière et le bobinage correspondant, ce qui peut faciliter la pénétration du vernis lors de l'imprégnation du stator.

Du fait que les encoches sont fermées après assemblage de la culasse, le risque de fuite du vernis d'imprégnation vers l'entrefer est éliminé. Le stator peut être utilisé comme une enceinte fermée d'imprégnation en assurant une étanchéité aux extrémités du stator seulement. L'outillage est ainsi simplifié. Ceci réduit également la quantité de vernis perdue et les opérations de nettoyage.

### Zone à perméabilité magnétique réduite

Les ponts de matière peuvent présenter des zones saturées magnétiquement durant le fonctionnement de la machine. On limite ainsi le passage du flux d'une encoche à l'autre sans pour autant empêcher le passage du flux du rotor vers le stator.

Pour obtenir la saturation, on peut diminuer localement la section du pont de matière disponible pour le passage du flux, par exemple en prévoyant au moins un rétrécissement localisé formé par au moins une rainure.

Au moins certains et mieux tous les ponts de matière peuvent présenter chacun au moins une zone à perméabilité magnétique réduite se présentant sous l'une ou plusieurs des formes suivantes :
- au moins un rétrécissement localisé formé par au moins une rainure s'étendant selon l'axe longitudinal du stator dans l'épaisseur du pont de matière ou au moins un écrasement localisé de la matière dans la largeur du pont de matière, et/ou
- au moins une ouverture dans la largeur du pont de matière, et/ou
- au moins un traitement, notamment localisé dans la largeur du pont de matière, diminuant localement la perméabilité magnétique du pont de matière.

La zone de perméabilité magnétique réduite formée par le rétrécissement localisé, l'écrasement localisé, l'ouverture ou le traitement localisé du pont de matière permet que ladite zone du pont de matière soit saturée magnétiquement lors du fonctionnement de la machine, ce qui limite le passage du flux et augmente l'efficacité de la machine.

Chaque zone à perméabilité magnétique réduite s'étend préférentiellement sur toute l'épaisseur de la couronne. En variante, la zone à perméabilité magnétique réduite s'étend sur une longueur inférieure ou égale à l'épaisseur de la couronne.

La zone à perméabilité magnétique réduite de chaque pont de matière est, de préférence, continue dans l'épaisseur de la couronne, rectiligne ou non.

En variante, la zone à perméabilité magnétique réduite est discontinue dans l'épaisseur de la couronne.

Par exemple, la couronne se présente sous forme de tôle empilées, chaque tôle présentant des dents reliées entre elles à leur base du côté de l'entrefer par des ponts de matière, au moins certains et mieux tous les ponts de matière présentant chacun au moins une zone à perméabilité magnétique réduite. Les zones à perméabilité magnétique réduite des ponts de matière de chacune des tôles peuvent ne pas être centrées. Chaque tôle de l'empilement de tôles peut être monobloc.

Au moins deux tôles adjacentes peuvent présenter au moins deux zones à perméabilité magnétique réduite agencées en quinconce l'une par rapport à l'autre en se recoupant partiellement ou non. L'agencement en quinconce peut être réalisé par retournement de certaines tôles, notamment d'une tôle sur deux, de l'empilement de tôles formant la couronne ou par découpage angulaire des tôles ou par utilisation de tôles différentes.

Chaque tôle est par exemple découpée dans une feuille d'acier magnétique, par exemple de l'acier de 0,1 à 1,5 mm d'épaisseur. Les tôles peuvent être revêtues d'un vernis isolant électrique sur leurs faces opposées avant leur assemblage au sein de l'empilement. L'isolation électrique peut encore être obtenue par un traitement thermique des tôles, le cas échéant.

De préférence, dans le cas où le fond des encoches présente au moins une rainure, les rainures sont ouvertes vers les encoches. Le fond des encoches présente de préférence au moins une surface d'appui, mieux au moins deux surfaces d'appui, orientée transversalement et le fond de la rainure est en retrait par rapport à cette ou ces surfaces. La ou les surfaces d'appui peuvent être orientées obliquement par rapport à l'axe radial de l'encoche correspondante ou, préférentiellement, orientées perpendiculairement à cet axe. La rainure forme une rupture de pente par rapport à la ou aux surfaces d'appui. Les bobinages, de préférence de section sensiblement rectangulaire, insérés dans l'encoche correspondante sont, de préférence, en appui contre les surfaces d'appui et en retrait par rapport au fond de la rainure. De préférence, les bobinages sont sans contact avec la rainure. La ou les surfaces d'appui sont préférentiellement planes. Le fond de l'encoche peut être plat, à l'exception de la rainure. Ceci permet un bon remplissage des encoches par les bobinages dans le cas de bobinages de section transversale rectangulaire, en permettant aux bobines de prendre appui à plat dans le fond des encoches.

La rainure dans le fond de l'encoche forme, de préférence, un jeu entre le pont de matière et le bobinage correspondant, ce qui peut faciliter la pénétration du vernis lors de l'imprégnation du stator.

Le pont de matière peut comporter au moins deux rainures telles que décrit précédemment. La ou les rainures peuvent être centrées par rapport à l'encoche ou non.

La surface interne du stator est, de préférence, cylindrique de révolution.

En variante, les rainures peuvent s'étendre sur la surface interne du stator.

De préférence, les rainures sont chacune de profil courbe en section dans un plan perpendiculaire à l'axe du stator, notamment de section sensiblement semi-circulaire.

L'écrasement localisé peut être réalisé dans l'épaisseur du pont de matière, c'est-à-dire selon un axe radial du stator, et constitue un rétrécissement localisé ayant une perméabilité magnétique réduite. L'écrasement forme, de préférence, une rainure dans le fond de l'encoche. Dans ce cas, l'écrasement localisé peut être tel que décrit ci-dessus pour les rainures.

En variante, l'écrasement localisé est réalisé dans l'épaisseur du stator c'est-à-dire selon un axe parallèle à l'axe longitudinal du stator, et présente une perméabilité magnétique réduite.

L'ouverture précitée s'étend préférentiellement selon l'axe longitudinal du stator sur toute l'épaisseur de la masse statorique. L'ouverture peut être de section transversale ovale, circulaire, ou de forme polygonale, par exemple à arêtes arrondies, notamment rectangulaire. Le pont de matière peut ne présenter qu'une seule ouverture dans sa largeur. L'ouverture peut être au centre du pont de matière. L'ouverture peut présenter deux zones amincies de part et d'autre de celle-ci, les zones amincies étant saturées magnétiquement lors du fonctionnement de la machine.

En variante, le pont de matière présente une pluralité de microperforations dans sa largeur. Les microperforations diminuent la section de tôle et permettent au pont de matière d'être saturé magnétiquement pour un flux magnétique moindre.

Le traitement localisé permet de modifier localement la perméabilité au flux magnétique de la matière du pont. Le traitement localisé peut s'étendre sur toute la largeur du pont de matière ou sur une portion seulement de celle-ci. Ce traitement peut être un traitement thermique qui modifie localement l'orientation des grains de métal et entraîne une baisse de la perméabilité magnétique dans le sens circonférentiel.

En variante, le traitement thermique est une contrainte thermique liée à la dégradation de la matière lors de la découpe laser du pont de matière.

Les ponts de matière peuvent être indéformables. Ceci accroit la rigidité du stator et améliore la durée de vie de la machine électrique.

### Encoches

Le fait que les encoches soient ouvertes radialement vers l'extérieur permet que les bobinages soient insérés dans les encoches par un déplacement radial vers l'intérieur des encoches. L'installation des bobinages est facilitée, d'une part en ce que l'accès à l'intérieur des encoches est plus aisé, s'agissant d'encoches ouvertes totalement et en direction de l'extérieur plutôt que vers l'entrefer, et d'autre part en ce que l'espace disponible autour de la couronne, pour les outillages nécessaires, voire pour une machine à bobiner, est bien plus important que l'espace disponible dans l'alésage du stator.

En outre, un tel stator présente de nombreux avantages du point de vue électromagnétique par rapport à un stator présentant des encoches ouvertes vers l'entrefer. Il permet de réduire fortement les perturbations électromagnétiques liées à la présence des ouvertures des encoches donnant sur l'entrefer dans l'art antérieur. En outre, le remplissage des encoches étant facilité, le taux de remplissage peut être amélioré, ce qui peut permettre d'augmenter encore les performances de la machine. Le couple volumique peut être augmenté.

L'absence d'ouverture des encoches vers l'entrefer permet de réduire les pulsations d'encoches. Les performances électromagnétiques de la machine en sont améliorées.

Au moins une encoche peut être à bords opposés parallèles entre eux, mieux toutes les encoches. On a ainsi un meilleur taux de remplissage des encoches. La largeur des encoches est, de préférence, sensiblement constante sur toute sa hauteur.

Au moins une dent, mieux toutes les dents, peut être de forme générale trapézoïdale lorsqu'observée en section dans un plan perpendiculaire à l'axe du stator. Au moins une dent, mieux toutes les dents, peuvent avoir des bords divergents lorsque l'on s'éloigne de l'axe de rotation de la machine. Une telle configuration peut permettre de compenser les obstacles au passage du flux magnétique qui peuvent être liés à la présence des premiers et deuxièmes reliefs coopérant ensemble et/ou avec des inserts, à une ouverture éventuelle ou à la présence d'un entrefer parasite à l'interface entre la culasse et la couronne. La plus petite largeur de la dent peut être sensiblement égale à la taille de l'interface entre la culasse et la couronne pour laquelle on a un contact étroit, c'est-à-dire en dehors des premiers et deuxièmes reliefs coopérant ensemble et/ou avec des inserts, ou d'un orifice éventuel.

De préférence, tous les ponts de matière présentent chacun au moins une zone déformable. Ceci permet de faire varier le diamètre de la couronne sur une plus grande plage de valeurs et d'avoir des propriétés magnétiques plus homogènes.

De préférence, chaque pont de matière présente une unique zone déformable.

Les zones déformables peuvent être centrées ou non au sein du pont de matière correspondant.

De préférence, chaque zone déformable a la forme d'un pli définissant au moins une gorge sur l'un des côtés du pont de matière, par exemple celui tourné vers l'entrefer, et un relief en saillie du côté opposé. De préférence, les gorges sont ouvertes vers l'entrefer et les reliefs en saillie s'étendent dans le fond de l'encoche.

De préférence, les reliefs en saillie s'étendent dans un renfoncement du fond de l'encoche correspondante, les reliefs en saillie étant notamment de hauteur inférieure ou égale à la profondeur dudit renfoncement. Ceci permet d'éviter que les reliefs ne dépassent dans le fond de l'encoche, ce qui facilite le remplissage de l'encoche par les bobinages. De préférence, après déformation du pont de matière, la hauteur des reliefs en saillie reste inférieure ou égale à la profondeur dudit renfoncement.

Les ponts de matière ayant une zone déformable peuvent présenter un axe médian, lorsque le stator est observé selon l'axe de rotation, courbe ou sous forme d'une ligne brisée, notamment sous la forme d'une arche ou d'un V.

En variante, la zone déformable est une zone du pont de matière pouvant s'étirer et se déformer par étirement, pour former une striction lors du montage de la couronne sur la culasse et/ou de l'insertion des bobinages dans les encoches.

De préférence, les zones déformables sont des zones du pont de matière qui sont saturées magnétiquement durant le fonctionnement de la machine. Ceci améliore le passage du flux électromagnétique entre les encoches et l'entrefer, ce qui permet de minimiser les harmoniques, et d'obtenir plus de couple par désaturation des dents et de la culasse.

De préférence, le fond des encoches présente chacun au moins une portion plane contre laquelle un bobinage, de préférence de section sensiblement rectangulaire, est en appui. La ou les portions planes sont sensiblement perpendiculaires à l'axe radial de l'encoche.

Le fond de l'encoche peut être plat, à l'exception d'un renfoncement. Ceci permet un bon remplissage des encoches par les bobinages dans le cas de bobinages de section transversale rectangulaire, en permettant aux bobinages de prendre appui à plat dans le fond de l'encoche.

En variante, le fond de l'encoche peut être totalement plat et le pont de matière peut se déformer par étirement pour former une striction, comme mentionné plus haut.

La zone déformable ou le renfoncement forme, de préférence, un jeu entre le pont de matière et le bobinage correspondant, ce qui peut faciliter la pénétration d'un vernis lors de l'imprégnation du stator.

La couronne peut être réalisée par enroulement en hélice d'une bande de tôle comportant des dents reliées par les ponts de matière, les bords opposés de chaque encoche devenant, de préférence, sensiblement parallèles entre eux lorsque la bande est enroulée sur elle-même pour former la couronne.

En variante, la bande peut être formée de secteurs comportant chacun plusieurs dents, les secteurs étant reliés par des liaisons, ces secteurs étant découpés dans une bande de tôle. Les liaisons peuvent être des ponts flexibles reliant les secteurs entre eux et/ou des parties de formes complémentaires, par exemple du type queue d'aronde et mortaise ou des reliefs complémentaires venant en appui l'un contre l'autre, notamment lorsque la couronne est maintenue en compression par la culasse. Les formes complémentaires peuvent être sur les ponts de matière de sorte que les différents secteurs sont assemblés au niveau des ponts de matière. De préférence, l'assemblage des formes complémentaires des différents secteurs se fait hors des zones déformables des ponts de matière. Ceci facilite l'assemblage, notamment dans le cas de machines volumineuses.

Par exemple, des secteurs présentent des formes en creux coopérant avec des formes en saillie complémentaires de secteurs adjacents.

En variante, la couronne comporte un empilement de tôles magnétiques prédécoupées.

En variante encore, la couronne est fabriquée par fabrication additive, par exemple par frittage de poudre.

La culasse peut être réalisée en enroulant directement en hélice une bande de tôle si sa largeur le permet, en formant ou non dans ladite bande de tôle des fentes adaptées lors de sa découpe, de manière à faciliter cet enroulement, ou en empilant des tôles magnétiques prédécoupées, ou des galettes obtenues par fabrication additive, par exemple par frittage de poudre.

Les bandes de tôles de la culasse et de la couronne peuvent être découpées séparément ou simultanément, éventuellement dans une même bande de tôle avec une ou des découpes communes.

La ou les bandes de tôles peuvent être découpées droites, puis cintrées.

La culasse est rapportée sur la couronne après l'installation des bobinages dans les encoches.

### Bobinages

Les bobinages peuvent être disposés dans les encoches de manière concentrée ou répartie.

Par « concentrée », on comprend que les bobinages sont enroulés chacun autour d'une seule dent.

Par « répartie », on entend qu'au moins l'un des bobinages passe successivement dans deux encoches non adjacentes.

De préférence, les bobinages sont disposés dans les encoches de manière répartie, notamment lorsque le nombre de pôles du rotor est inférieur ou égal à 8.

Les bobinages comportent chacun au moins un conducteur électrique qui peut être en section transversale de forme circulaire, ou de forme polygonale à arêtes arrondies, préférentiellement de forme rectangulaire, cette liste n'étant pas limitative.

Lorsque les conducteurs sont de section transversale circulaire, ils peuvent être disposés dans l'encoche selon un empilement hexagonal. Lorsque les conducteurs sont de section transversale polygonale, ils peuvent être disposés dans l'encoche en une ou plusieurs rangées orientées radialement. L'optimisation de l'empilement peut permettre de disposer dans les encoches une plus grande quantité de conducteurs électriques et donc d'obtenir un stator de plus grande puissance, à volume constant.

Les conducteurs électriques peuvent être disposés de manière aléatoire dans les encoches ou rangées. De préférence, les conducteurs électriques sont rangés dans les encoches. Par « rangés », on entend que les conducteurs ne sont pas disposés dans les encoches en vrac mais de manière ordonnée. Ils sont empilés dans les encoches de manière non aléatoire, étant par exemple disposés selon une ou plusieurs rangées de conducteurs électriques alignés, notamment selon une ou deux rangées, préférentiellement selon une unique rangée.

### Isolants

Les conducteurs électriques sont de préférence isolés électriquement de l'extérieur par un revêtement isolant, notamment un émail.

Les bobinages peuvent être séparés des parois de l'encoche par un isolant, notamment par au moins une feuille d'isolant. Un tel isolant en feuille permet une meilleure isolation des bobinages par rapport à l'encoche.

Lors de l'insertion des bobinages dans les encoches, qui se fait radialement et non axialement, les conducteurs de déplacent au contact d'une longueur de la masse statorique qui au maximum correspond à la profondeur de l'encoche. Il en résulte des contraintes mécaniques plus faibles que pour une insertion axiale, où les conducteurs sont exposés à un déplacement au contact de la masse statorique sur une longueur égale à la dimension axiale de celle-ci. De préférence, chaque encoche reçoit au moins deux bobinages, notamment au moins deux bobinages de phases différentes. Ces deux bobinages peuvent se superposer radialement. Les deux bobinages peuvent être séparés entre eux par au moins une feuille d'isolant, de préférence par au moins deux feuilles d'isolant.

Chaque bobinage peut être formé de plusieurs spires.

En variante, les bobinages sont dits en épingles, notamment en épingle en forme de U (« U-pin » en anglais) ou droite, en forme de I (« I-pin » en anglais), et comportent dans ce cas une portion en forme de I ou de U dont les extrémités sont soudées à des conducteurs hors de l'encoche correspondante.

Le stator peut être vrillé (« *skewing* » en anglais). Un tel vrillage peut contribuer à serrer les bobinages dans les encoches et de réduire les harmoniques d'encoches.

### Machine et rotor

L'invention a encore pour objet une machine électrique tournante, telle qu'un moteur synchrone ou une génératrice synchrone, comportant un stator tel que défini précédemment. La machine peut être synchrone ou asynchrone. La machine peut être à reluctance. Elle peut constituer un moteur synchrone.

La machine électrique tournante peut comporter un rotor. Le rotor peut être un rotor bobiné ou à aimants permanents. Dans le cas où la machine est destinée à fonctionner en alternateur, le rotor peut être bobiné. Dans le cas où la machine est destinée à fonctionner en moteur, le rotor peut être à aimants permanents.

Au cours de la fabrication de la machine, le rotor peut être relié à la couronne du stator, notamment pas des liaisons de matière permettant de rigidifier la couronne du stator pendant le bobinage. Après le bobinage, voire après l'installation de la culasse du stator, ces liaisons de matière sont découpées pour permettre la rotation du rotor par rapport au stator et l'utilisation de la machine. La découpe peut être effectuée par faisceau d'électrons.

Les liaisons de matière peuvent être disposées au niveau des dents du stator, par exemple une dent sur deux.

La machine peut avoir une taille relativement élevée. Le diamètre du rotor peut être supérieur à 50 mm, mieux supérieur à 80 mm, étant par exemple compris entre 80 et 500 mm.

Le rotor peut comporter une masse rotorique s'étendant selon l'axe de rotation et disposée autour d'un arbre. L'arbre peut comporter des moyens de transmission de couple pour l'entraînement en rotation de la masse rotorique.

Le rotor peut être monté en porte à faux ou non.

Le rotor peut être réalisé en plusieurs morceaux de rotor alignés suivant la direction axiale, par exemple trois morceaux. Chacun des morceaux peut être décalé angulairement par rapport aux morceaux adjacents (« *step skew* » en anglais). Le rotor peut être vrillé.

### Procédé de fabrication et machine

L'invention a encore pour objet un procédé de fabrication d'un stator tel que défini plus haut, dans lequel on découpe simultanément dans une même tôle la couronne et la culasse par une découpe unique, puis on assemble la couronne et la culasse après avoir décalé angulairement la culasse et la couronne l'une par rapport à l'autre pour faire coopérer les premiers et deuxièmes reliefs.

On peut mettre en oeuvre une étape d'insertion des bobinages dans les encoches de la couronne du stator. Lors de cette étape, on peut disposer au moins un bobinage dans deux encoches différentes non consécutives de la couronne du stator.

Le procédé peut comporter une étape de déformation de la ou des zones déformables lors du montage de la culasse sur la couronne et/ou de l'insertion des bobinages dans les encoches. Une telle déformation peut modifier le diamètre de la couronne et la largeur des encoches.

L'étape d'insertion des bobinages dans les encoches peut être mis en oeuvre de sorte à élargir les encoches par extension des ponts de matière. Ceci entraine également une augmentation du diamètre extérieur de la couronne. Ceci facilite l'insertion des bobinages.

Les bobinages sont, de préférence, insérés dans les encoches par un déplacement radial vers l'intérieur, les encoches étant ouvertes radialement vers l'extérieur.

L'étape de montage de la culasse sur la couronne peut entraîner une diminution du diamètre intérieur de la couronne par resserrement des ponts de matière. Ceci permet d'assembler la culasse et la couronne tout en ayant un jeu minimal entre ces dernières afin d'améliorer les performances électriques en réduisant la somme des entrefers du pôle magnétique.

De préférence, le procédé comporte une étape de découpage de la couronne et de la culasse simultanément dans une même tôle avec une ou plusieurs découpes communes, notamment une découpe unique. Dans ce cas, le montage de la culasse sur la couronne peut entraîner une diminution du diamètre extérieur de la couronne par resserrement du ou des ponts de matière. En effet, lors de la découpe de la couronne et de la culasse par une presse, des contraintes sont générées et la matière découpée se relâche ensuite, ce qui entraine une extension de la matière au-delà de la ligne de découpe et rend difficile l'assemblage des deux parties au niveau de la découpe commune en l'absence desdits ponts.

Le procédé peut comporter une étape de déformation des zones déformables pour augmenter le diamètre de la couronne de sorte à réduire le jeu éventuel entre la couronne et la culasse après l'étape de montage de la culasse sur la couronne.

Notamment dans le cas où les ponts de matière sont dépourvus de zone déformable, on peut en variante dilater la culasse par chauffage ou contracter la couronne par refroidissement, afin de faciliter l'assemblage de la culasse sur la couronne.

### Description détaillée

L'invention pourra être mieux comprise à la lecture de la description détaillée qui va suivre, d'exemples de réalisation non limitatifs de celle-ci, et à l'examen du dessin annexé, sur lequel :
- la figure 1 est une vue en perspective, schématique et partielle, d'un exemple de stator ne faisant pas partie de l'invention.
- la figure 2 est une vue en perspective, schématique et partielle, de la couronne du stator de la figure 1,
- la figure 3 en est une vue de détail,
- la figure 4 représente en coupe transversale, de manière schématique et partielle, une machine comportant le stator de la figure 1,
- la figure 5 représente de manière schématique une portion de la couronne de ce stator,
- la figure 6 représente de manière schématique une variante de réalisation de machine ne faisant pas partie de l'invention.,
- la figure 7 en est une vue de détail,
- les figures 8 à 12 illustrent d'autres variantes de réalisation du stator ne faisant pas partie de l'invention.,
- les figures 13 et 14 sont des vue en perspective, schématiques et partielles, respectivement de la culasse et de la couronne d'une variante de réalisation,
- la figure 15 est une coupe transversale, schématique et partielle, d'une variante de réalisation ne faisant pas partie de l'invention.,
- les figures 16 à 18 illustrent des variantes de réalisation du stator ne faisant pas partie de l'invention.,
- la figure 19 est une coupe transversale, schématique et partielle, du stator de la figure 18,
- la figure 20 est une coupe transversale schématique et partielle, de la culasse de la figure 19,
- la figure 21 illustre un stator réalisé conformément à l'invention, et
- la figure 22 en est une vue de détail.

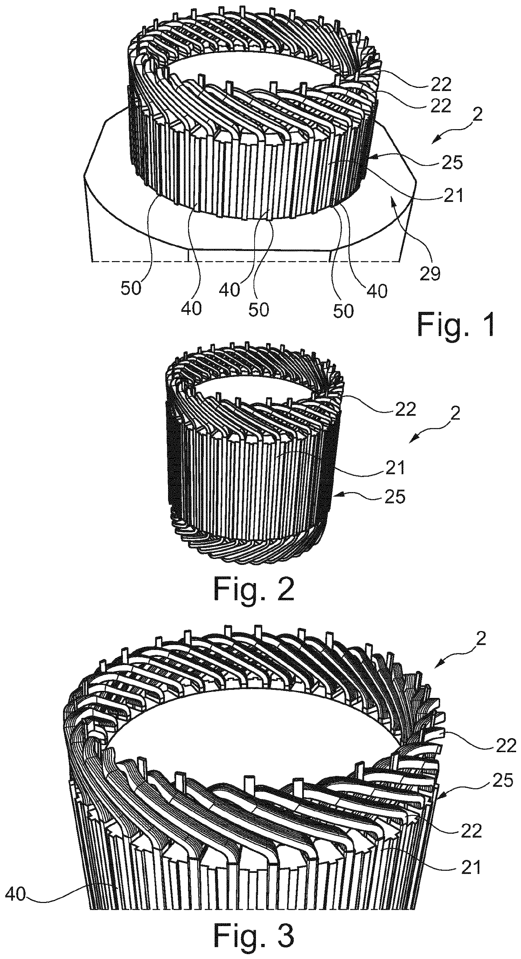

On a illustré aux figures 1 à 5 une machine électrique tournante 10, comportant un rotor 1 et un stator 2. Le stator 2 permet de générer un champ magnétique tournant d'entraînement du rotor 1 en rotation, dans le cadre d'un moteur synchrone, et dans le cas d'un alternateur, la rotation du rotor induit une force électromotrice dans les bobinages du stator.

Les exemples illustrés ci-dessous sont schématiques et les dimensions relatives n'ont pas été nécessairement respectées.

Le stator 2 comporte des bobinages 22, lesquels sont disposés dans des encoches 21 ménagées entre des dents 23 d'une couronne dentelée 25 radialement intérieure. Les encoches sont ouvertes radialement vers l'extérieur et fermées du côté de l'entrefer par des ponts de matière 27, reliant chacun deux dents consécutives de la couronne 25 et définissant le fond de l'encoche entre ces dents.

Les encoches 21 sont, dans l'exemple décrit, à bords radiaux 33 parallèles entre eux, et sont, en section dans un plan perpendiculaire à l'axe de rotation X de la machine, de forme sensiblement rectangulaire.

Le stator 2 comporte une culasse 29 radialement extérieure et rapportée au contact de la couronne 25. La couronne 25 et la culasse 29 sont formées chacune d'un paquet de tôles magnétiques empilées selon l'axe X, les tôles étant par exemple identiques et superposées exactement. Elles peuvent être maintenues entre elles par clipsage, par des rivets, par des tirants, des soudures et/ou toute autre technique. Les tôles magnétiques sont de préférence en acier magnétique.

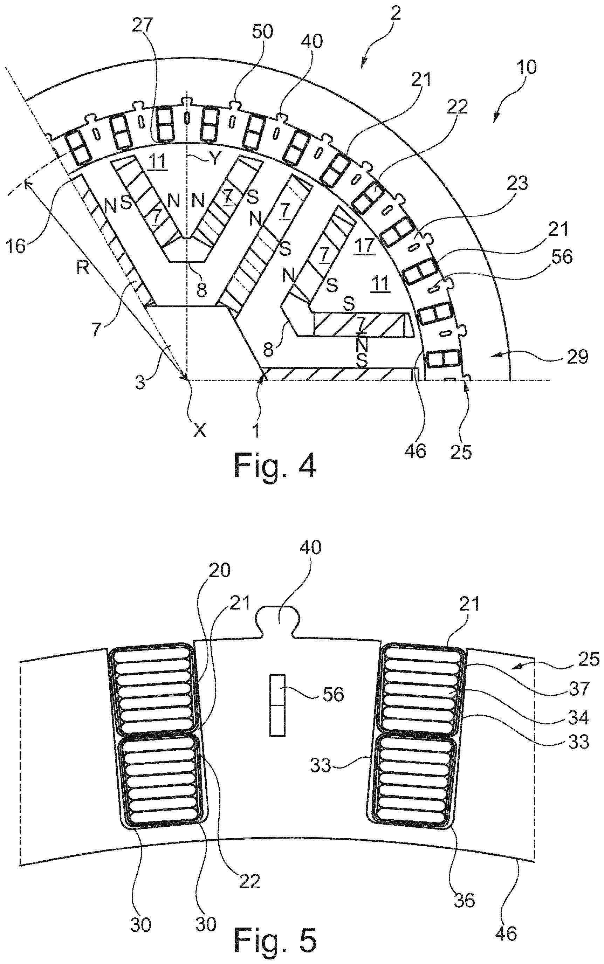

Dans l'exemple illustré, les dents 23 de la couronne 25 présentent des reliefs complémentaires 56 en surface permettant de clipser les différentes tôles composant la couronne 25 entre elles, comme visible sur la figure 5.

La couronne et/ou la culasse peuvent encore être formées d'une bande de tôle découpée enroulée sur elle-même.

La culasse 29 est montée sur la couronne 25 par coopération de formes. La couronne 25 et la culasse 29 présentent respectivement des premiers 40 et deuxièmes 50 reliefs coopérant pour immobiliser la culasse 29 par rapport à la couronne 25. Ces premiers 40 et deuxièmes 50 reliefs permettent une immobilisation angulaire et radiale.

Les premiers reliefs 40 sont situés sur la surface externe de la couronne 25, étant disposés sur les dents, à leur extrémité faisant face à la culasse.

Les deuxièmes reliefs 50 sont situés sur la surface interne de la culasse 29, face aux dents de la couronne et plus particulièrement face aux premiers reliefs. Ils sont décalés angulairement par rapport aux encoches de la couronne.

Les premiers 40 et deuxièmes 50 reliefs sont complémentaires et coopèrent par complémentarité de formes et pour maintenir la couronne et la culasse en position l'une par rapport à l'autre.

Les bobinages 22 peuvent être disposés dans les encoches 21 de manière concentrée ou répartie, de préférence répartie. Comme illustré sur la figure 5, les conducteurs électriques 34 des bobinages 22 sont disposés dans les encoches de manière rangée. Les conducteurs électriques 34 sont de préférence de section transversale aplatie, rectangulaire et sont superposés radialement par exemple en une seule rangée. Les conducteurs électriques 34 sont émaillés ou revêtus de tout autre revêtement isolant adapté.

Chaque encoche 21 peut recevoir deux bobinages 22 empilés, de phases différentes. Chaque bobinage 22 peut, en section transversale, être de forme sensiblement rectangulaire.

Chaque bobinage 22 est entouré d'une feuille d'isolant 37 permettant d'isoler les bobinages des parois 33 et 36 de l'encoche et les bobinages 22 de phases différentes.

Les conducteurs électriques 22 sont assemblés en bobinages 22 hors des encoches 21 et entourés d'une feuille d'isolant 27 et les bobinages 22 avec les feuilles d'isolant 37 sont insérés dans les encoches 21. Cette opération est facilitée par le fait que les encoches sont ouvertes totalement radialement vers l'extérieur.

Le rotor 1 représenté à la figure 4 comporte une ouverture centrale 5 pour le montage sur un arbre et comporte une masse magnétique rotorique 3 s'étendant axialement selon l'axe de rotation X du rotor, cette masse rotorique étant par exemple formée par un paquet de tôles magnétiques empilées selon l'axe X, les tôles étant par exemple identiques et superposées exactement. Le rotor 1 comporte par exemple une pluralité d'aimants permanents 7 disposés dans des logements 8 de la masse magnétique rotorique 3. En variante, le rotor est bobiné.

Le stator peut être obtenu au moyen du procédé de fabrication qui va maintenant être décrit. Les bobinages 22 sont d'abord insérés dans les encoches 21 de la couronne 25 par un déplacement radial des bobinages 21 vers l'intérieur des encoches 21. Dans une étape suivante, la culasse 29 est rapportée en force sur la couronne 27, par déplacement axial de l'une par rapport à l'autre, comme illustré sur la figure 1.

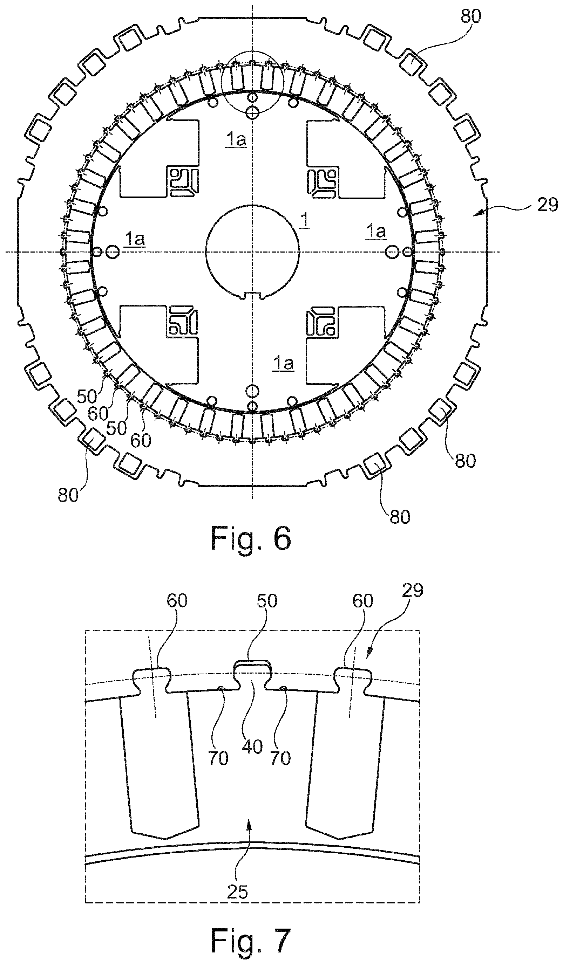

Dans une variante de réalisation, la culasse peut comporter des troisièmes reliefs 60 disposés sur la surface intérieure de la culasse, face aux encoches de la couronne, comme illustré aux figures 6 et 7. Ces troisièmes reliefs sont décalés par rapport aux dents de la couronne, et ne coopèrent pas avec la couronne, lorsque la culasse est rapportée au contact de la couronne.

Ils peuvent servir au passage d'une circulation de fluide de refroidissement, par exemple à une circulation d'air, pour le refroidissement du stator.

Dans l'exemple décrit, les premiers reliefs 40 de la couronne résultent du découpage des troisièmes reliefs 60 de la culasse. La couronne et la culasse peuvent être découpées simultanément dans une même tôle par une découpe unique. Après découpage, on décale les deux bandes de tôles résultantes, afin de faire coopérer les premiers reliefs avec les deuxièmes reliefs. Dans l'exemple décrit, les premiers et troisièmes reliefs ont une forme exactement complémentaire. Les troisièmes reliefs ont une forme analogue à celle des deuxième reliefs, mais légèrement plus grande, de façon à permettre la bonne coopération des premiers reliefs avec les deuxièmes reliefs, et notamment leur insertion aisée dans ceux-ci.

Enfin, la culasse comporte des entailles 70 au niveau des extrémités des encoches de la couronne, à proximité de la culasse. Ces entailles 70 peuvent permettre de ménager des angles arrondis dans les encoches de la couronne à proximité de la culasse, avec une découpe propre et sans bavure.

Par ailleurs, la culasse comporte des conduits externes 80 permettant également la circulation d'un fluide de refroidissement, par exemple à une circulation d'air, pour le refroidissement du stator.

Cet exemple diffère également de ceux précédemment décrits par la forme du rotor 1, lequel comporte ici des pôles saillants 1a destinés à recevoir des bobines non illustrées.

Dans l'exemple décrit en référence aux figures 1 à 5, le fond 35 des encoches 21 est de forme sensiblement complémentaire de celle des bobinages 22, étant plan.

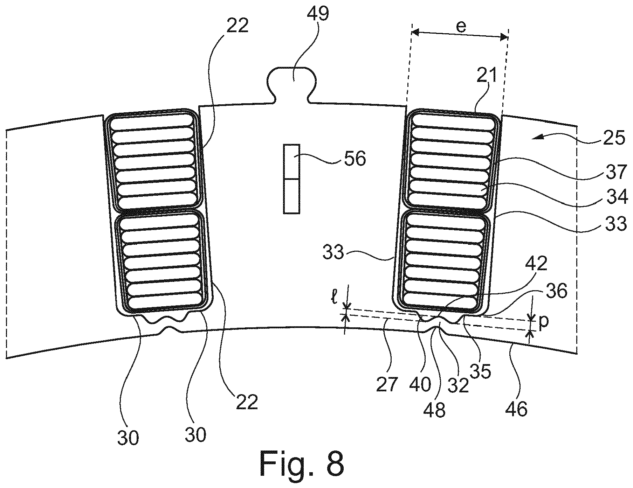

En variante, le fond des encoches 35 peut comporter un renfoncement 40, comme illustré à la figure 8. Dans cet exemple, le fond 35 des encoches 21 présente deux portions planes 30 de part et d'autre du renfoncement 40, contre lesquelles les bobinages 22 rectangulaires sont en appui. Le fond 35 des encoches 21 est relié aux bords radiaux 33 par des arrondis 36. Le renfoncement 40 se présente sous la forme d'une rainure longitudinale s'étendant le long de l'axe de rotation X de la machine, centrée sur le fond de l'encoche 21.

Le renfoncement 40 présente de préférence une profondeur *p* comprise entre 0,4 mm et 1 mm, par exemple égale à 0,6 mm.

Les ponts de matière 27 présentent de préférence chacun une zone déformable 32 permettant de faire varier leur dimension circonférentielle e, correspondant à la largeur des encoches 21, et de cette façon de faire varier le diamètre intérieur moyen 2R de la couronne 25.

Dans l'exemple illustré, les zones déformables 32 se présentent sous la forme de plis.

Les ponts de matière 27 présentent une largeur variable, les zones déformables 32 étant les zones de plus faible largeur. La plus petite largeur des ponts de matière 27 est de préférence comprise entre 0,3 mm et 0,6 mm, par exemple égale à 0,4 mm.

Comme cela est illustré sur la figure 8, chaque pli définit du côté du fond des encoches 35 un relief en saillie 42 s'étendant dans le renfoncement 40 et, du côté de l'entrefer 46, une gorge 48.

Chaque relief en saillie 42 se présente sous la forme d'une nervure arrondie à son sommet. Il présente une hauteur *h* inférieure à la profondeur *p* du renfoncement 40, de sorte à ne pas dépasser de celui-ci.

Les gorges 48 se présentent sous la forme de rainures de section arrondie dans un plan perpendiculaire à l'axe X.

Lorsque les zones déformables 32 sont étirées, les gorges 48 et reliefs en saillie 42 s'aplatissent pour allonger le pont de matière et ainsi élargir l'encoche 21.

Lorsque la couronne 25 est comprimée, les gorges 48 et reliefs en saillie 42 se plient. Les reliefs en saillie 42 présentent une hauteur *hₘₐₓ* supérieure à la hauteur *h* sans déformation et les renfoncements 40 présentent une profondeur *pₘₐₓ* supérieure à profondeur du renfoncement *p* sans déformation, la hauteur *hₘₐₓ* restant inférieure à la profondeur *pₘₐₓ* du renfoncement 40 correspondant.

Ce stator peut être obtenu au moyen du procédé de fabrication qui va maintenant être décrit. Les bobinages 22 sont insérés dans les encoches 21 de la couronne 25 par un déplacement radial des bobinages 21 vers l'intérieur des encoches 21. Lors de l'insertion des bobinages 22, les encoches 21 peuvent s'élargir par déformation des zones déformables des ponts de matière 27. Le diamètre extérieur de la couronne 25 peut ainsi être plus grand qu'avant bobinage. Dans une étape suivante, la culasse 29 est rapportée en force sur la couronne 25. Cet assemblage peut entraîner une diminutiondu diamètre extérieur élargi de la couronne 25 par déformation des zones déformables 32. Le jeu entre la couronne et la culasse est alors minimal.

Dans d'autres variantes de réalisation, le fond de l'encoche 21 pourrait ne pas présenter de renfoncement. Les reliefs en saillie peuvent être alors de forme arrondie en section dans un plan perpendiculaire à l'axe X.

En variante encore, le fond de l'encoche 21 pourrait ne pas présenter de renfoncement et les plis peuvent être formés chacun d'une gorge tournée vers ce fond de l'encoche 21 et un relief en saillie peut s'étendre dans l'entrefer 46.

Les gorges 48 et reliefs en saillie 42 peuvent avoir un profil sous forme de ligne brisée en forme de V et en ce que le fond de l'encoche 21 est de largeur décroissante vers le relief en saillie à partir des bords radiaux 33 de l'encoche 21.

La zone déformable est une zone qui peut s'étirer et se déformer par étirement pour former une striction. Lorsqu'elle est étirée, la zone déformable 32 peut s'amincir localement. Avant le montage de la culasse, le pont de matière 27 peut présenter une épaisseur constante.

Le fond de l'encoche peut présenter deux zones déformables 32 telles que décrites précédemment.

Dans les exemples qui viennent d'être décrits, l'interface entre la culasse et la couronne est de forme sensiblement cylindrique, en dehors des premiers et deuxièmes reliefs qui ont une forme générale de queue d'aronde avec des angles arrondis.

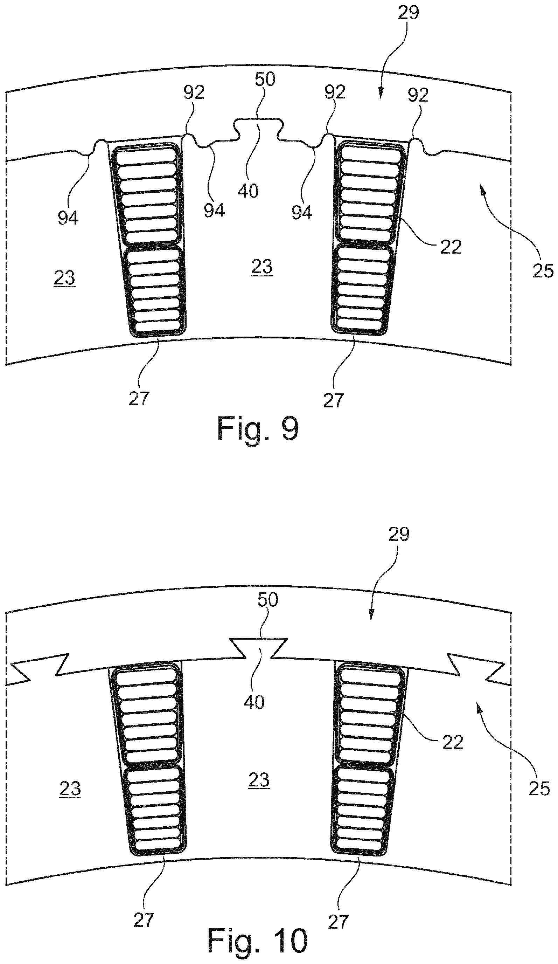

Le mode de réalisation de la figure 9 diffère de celui des figures 1 à 5 en ce que les encoches de la couronne comportent des angles arrondis 92 à proximité de la culasse. L'interface forme également une ondulation 94, permettant d'améliorer encore le calage angulaire entre la culasse et la couronne.

Dans une autre variante de réalisation illustrée à la figure 10, les premiers 40 et deuxièmes 50 reliefs ont une forme de queue d'aronde et mortaise, avec dans cet exemple des angles aigus.

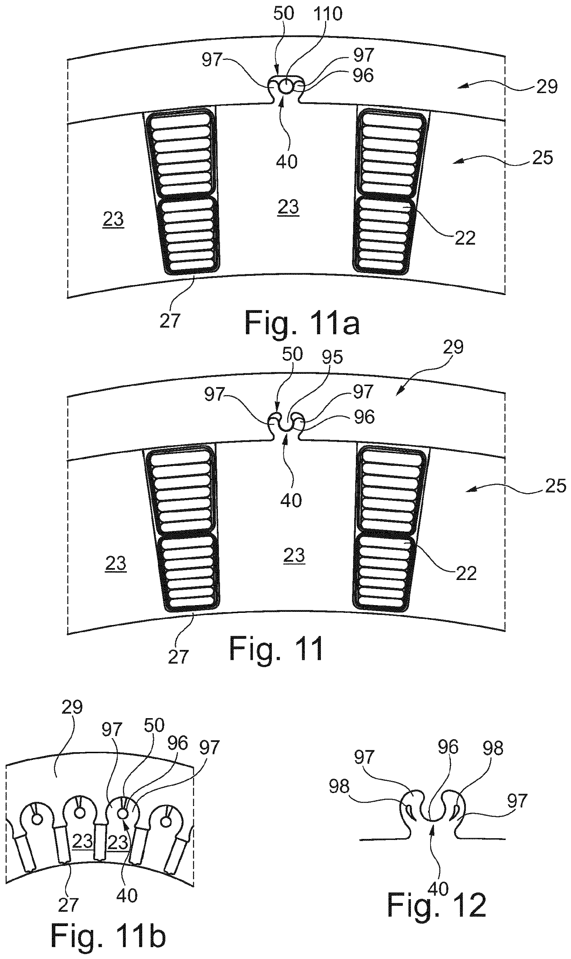

Les premiers 40 et deuxièmes 50 reliefs peuvent prendre une forme de clef insérée dans une cage, comme illustré à la figure 11. Dans cet exemple, les deuxièmes reliefs 50 comportent une excroissance arrondie 95 qui vient s'imbriquer dans une cage arrondie 96 des premiers reliefs 40. La cage 96 peut être délimitée par deux branches 97, lesquelles peuvent s'écarter l'une de l'autre ou non lors de l'insertion de l'excroissance arrondie 95 du deuxième relief 50.

En variante, les deux branches 97 peuvent s'écarter sous l'action d'un insert 110 introduit radialement, comme illustré sur la figure 11a.

Dans l'exemple de la figure 11b, les deux branches 97 du premier relief 40 ont une forme de portion de disque évidé en son centre.

Les premiers reliefs peuvent comporter une ou des ouvertures 98, comme illustré dans la variante de la figure 12, de part et d'autre de la cage arrondie 96. Ces ouvertures 98 peuvent être ménagées au milieu des branches précitées.

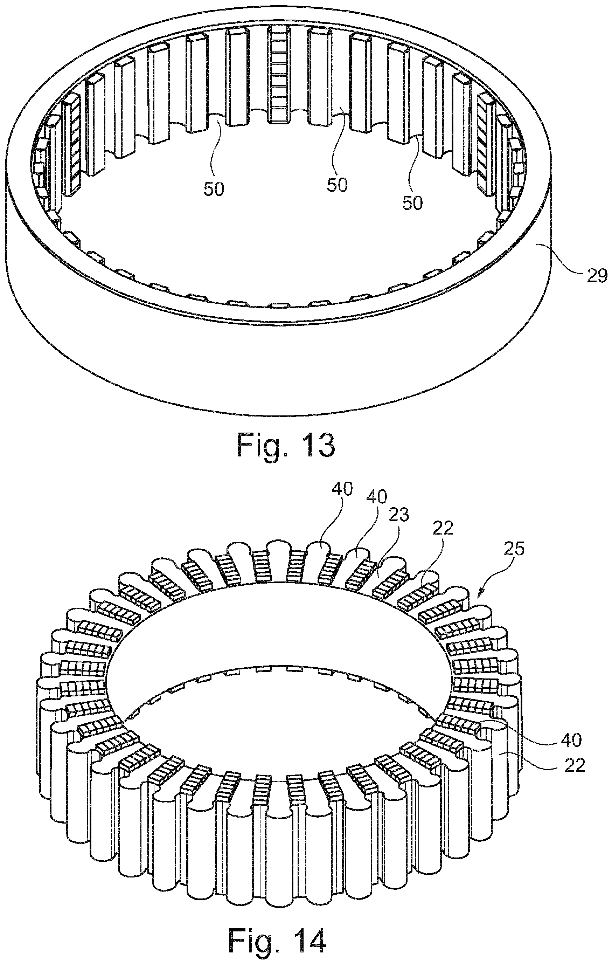

Dans la variante de réalisation illustrée aux figures 13 et 14, les premiers reliefs 40 ont une forme de portion de disque, s'étendant sur une étendue angulaire d'environ 260° autour d'un centre de courbure. Les deuxièmes reliefs ont une forme de renfoncement en forme de portion de disque, de forme correspondante. L'étendue angulaire de la portion de disque peut être strictement supérieure à 180°, étant notamment comprise entre 180° exclu et 300°.

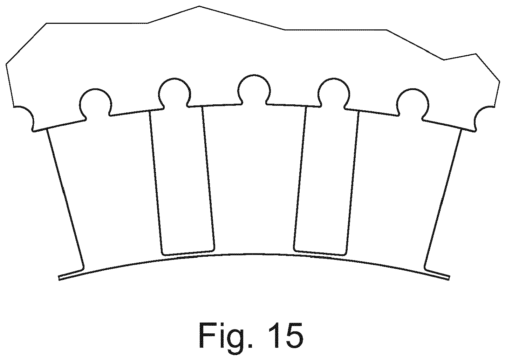

La variante de la figure 15 diffère des figures 13 et 14 par la présence de troisièmes reliefs également en forme de portion de disque, et s'étendant sur une étendue angulaire d'environ 260°.

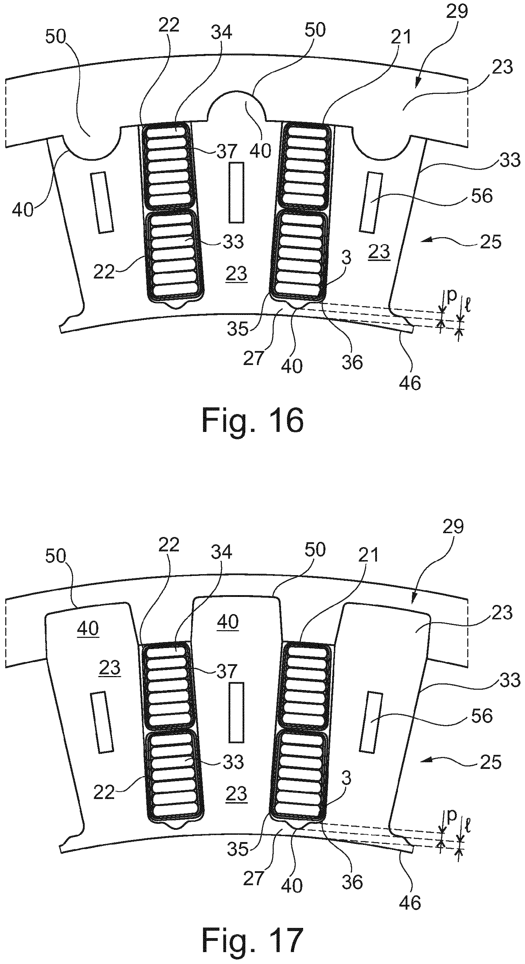

Dans l'exemple de réalisation de la figure 16, les premiers 40 et deuxièmes 50 reliefs ont chacun alternativement une forme de portion de disque ou de renfoncement en forme de portion de disque, lorsque l'on se déplace autour de l'axe de rotation de la machine. Ladite portion de disque ou le renfoncement correspondant s'étendent sur une étendue angulaire d'environ 180°.

Les deuxièmes reliefs 50 peuvent avoir une forme de renfoncement dans lesquels sont disposées les extrémités des dents 23, comme illustré à la figure 17. Les extrémités des dents constituent dans ce cas les premiers reliefs 40 de la couronne 25. Le renfoncement a une largeur légèrement supérieure à la largeur des dents au niveau de leur extrémité libre. Les extrémités libres des dents sont légèrement biseautées, de façon à favoriser leur insertion dans les renfoncements 50 de la culasse 29. Au niveau des extrémités libres des dents, les bords des dents peuvent aller en convergeant légèrement lorsque l'on s'éloigne de l'axe de rotation de la machine.

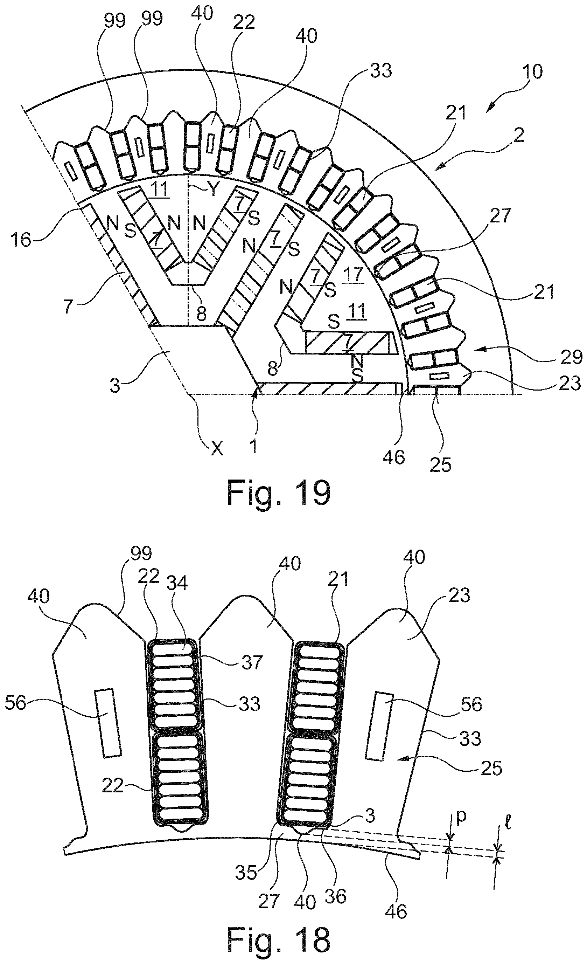

Dans la variante de réalisation illustrée aux figures 18 à 20, l'interface entre la culasse et la couronne forme des ondulations 99. A cet effet, les premiers reliefs 40 ont une forme de bossage et les deuxièmes reliefs 50 une forme de renfoncement correspondant.

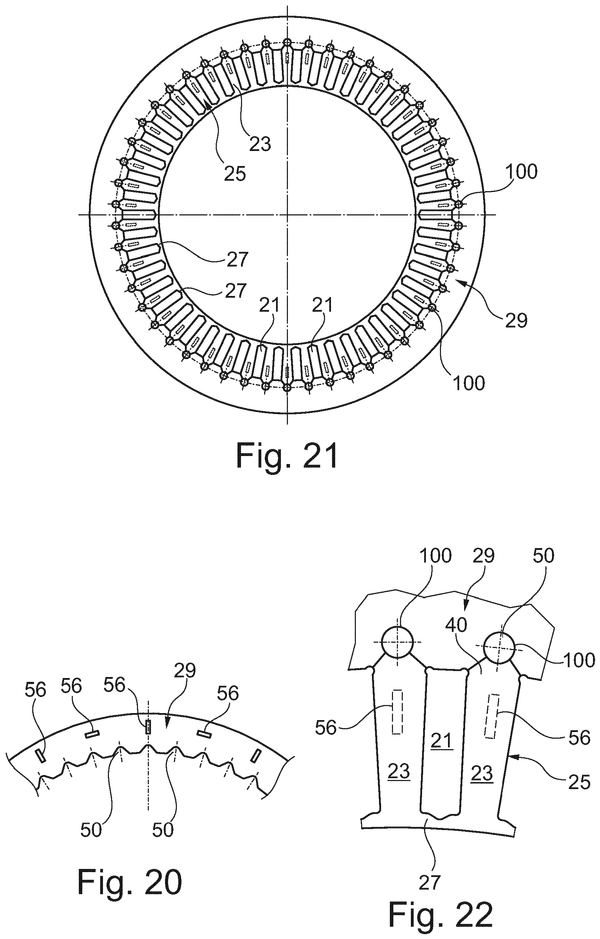

Dans l'exemple illustré, des dents 23 de la couronne 25 présentent des reliefs complémentaires 56 en surface permettant de clipser les différentes tôles composant la couronne 25 entre elles. Dans cet exemple de la figure 18, un relief complémentaire 56 est présent sur une dent sur deux. Bien entendu, on ne sort pas du cadre de la présente invention si toutes les dents comportent de tels reliefs complémentaires, ou une dent sur trois ou sur quatre par exemple. La culasse peut également en comporter, comme illustré sur la figure 20.

Ces reliefs 56 peuvent être de forme générale oblongue, par exemple rectangulaire, et ils peuvent avoir un grand axe orienté radialement, ou en variante orienté circonférentiellement.

Des trous 100 sont ménagés à l'interface entre la couronne et la culasse, comme illustré aux figures 21 et 22. Ces trous 100 permettent d'éviter la présence d'arêtes vives au niveau de l'interface. On a un contact maximal entre les bords droits de part et d'autre des trous 100.

Ces trous 100 peuvent servir au passage d'une circulation de fluide de refroidissement, par exemple à une circulation d'air, pour le refroidissement du stator. Ils peuvent en variante servir au passage de tirants de maintien du stator.

L'invention n'est pas limitée à ces exemples d'interface entre la culasse et la couronne, et celle-ci peut être réalisée avec d'autres formes, sans sortir du cadre de l'invention défini par les revendications annexées.

L'expression « comportant un » doit être comprise comme étant synonyme de « comprenant au moins un ».

## Revendications

1. Stator (2) de machine électrique tournante (1), comportant :
- une couronne (25) radialement intérieure comportant des dents (23) et des encoches (21) ouvertes radialement vers l'extérieur s'étendant entre les dents, des ponts de matière (27) reliant deux dents adjacentes à leur base et définissant le fond de l'encoche entre ces dents, et
- une culasse (29) radialement extérieure, rapportée au contact de la couronne, la couronne et la culasse présentant respectivement des premiers (40) et deuxièmes (50) reliefs coopérant ensemble et/ou avec un ou plusieurs inserts, et
- des bobinages (22) disposés de manière répartie dans les encoches,
le stator comportant des trous (100) ménagés à l'interface entre la couronne et la culasse, un trou (100) étant défini en partie par la culasse et en partie par la couronne, les trous (100) pouvant servir au passage d'une circulation de fluide de refroidissement pour le refroidissement du stator.

2. Stator selon la revendication précédente, les premiers reliefs de la couronne étant disposés sur les dents, notamment à leur extrémité faisant face à la culasse.

3. Stator selon l'une quelconque des revendications précédentes, la culasse (29) comportant des troisièmes reliefs (60) disposés sur la surface intérieure de la culasse, face aux encoches de la couronne.

4. Stator selon la revendication précédente, les premiers reliefs (40) de la couronne résultant du découpage des troisièmes reliefs (60) de la culasse.

5. Stator selon l'une quelconque des revendications précédentes, les encoches comportant des angles arrondis (92) à proximité de la culasse.

6. Stator selon l'une quelconque des revendications précédentes, les premiers et deuxièmes reliefs ayant respectivement chacun un centre de courbure, le centre de courbure des premiers reliefs étant décalé vers l'axe de rotation de la machine par rapport au centre de courbure des deuxièmes reliefs.

7. Stator selon l'une quelconque des revendications précédentes, les premiers et/ou les deuxièmes reliefs prenant une forme de portion de disque, pouvant notamment s'étendre sur une étendue angulaire d'environ 180°, ou sur une étendue angulaire supérieure à 180°, mieux supérieur à 210°, voire supérieure à 240°.

8. Stator selon l'une quelconque des revendications précédentes, les deuxièmes reliefs ayant une forme de renfoncement dans lesquels sont disposées les extrémités des dents.

9. Stator selon l'une quelconque des revendications précédentes, les premiers et deuxièmes reliefs étant configurés de telle sorte que l'interface entre la couronne et la culasse ait une forme ondulée (99).

10. Stator selon l'une quelconque des revendications précédentes, les premiers et deuxièmes reliefs ayant une forme de queue d'aronde et mortaise ou de clef insérée dans une cage.

11. Stator selon l'une quelconque des revendications précédentes, des trous (100) étant ménagés à l'interface entre la couronne et la culasse.

12. Stator selon l'une quelconque des revendications précédentes, au moins une partie des ponts de matière (27) présentant au moins une zone déformable (32) pouvant se déformer lors du montage de la culasse (29) sur la couronne (25), les ponts de matière (27) pouvant notamment présenter des zones saturées magnétiquement durant le fonctionnement de la machine, notamment des zones de moindre largeur.

13. Stator selon l'une quelconque des revendications précédentes, les encoches (21) présentant au moins une portion plane (30) contre laquelle les bobinages (22), de préférence de section sensiblement rectangulaire, sont en appui.

14. Stator selon l'une quelconque des revendications précédentes, les bobinages (22) comportant chacun au moins un conducteur électrique (34) de forme, en section transversale, rectangulaire.

15. Procédé de fabrication d'un stator selon l'une quelconque des revendications 1 à 14, dans lequel on découpe simultanément dans une même tôle la couronne et la culasse par une découpe unique, puis on assemble la couronne et la culasse après avoir décalé angulairement la culasse et la couronne l'une par rapport à l'autre pour faire coopérer les premiers et deuxièmes reliefs.

## Patentansprüche

1. Stator (2) einer rotierenden elektrischen Maschine (1), umfassend:
- einen radial inneren Zahnkranz (25), der Zähne (23) und radial nach außen offene Nuten (21), die sich zwischen den Zähnen erstrecken, umfasst, wobei Materialbrücken (27) zwei benachbarte Zähne an deren Fuß verbinden und den Boden der Nut zwischen diesen Zähnen definieren, und
- ein radial äußeres Joch (29), das an den Zahnkranz angesetzt ist, wobei der Zahnkranz und das Joch erste (40) bzw. zweite (50) Reliefs aufweisen, die miteinander und/oder mit ein oder mehreren Einsätzen zusammenwirken, und
- Wicklungen (22), die verteilt in den Nuten angeordnet sind,
wobei der Stator Löcher (100) umfasst, die an der Grenzfläche zwischen dem Zahnkranz und dem Joch angeordnet sind, wobei ein Loch (100) zum Teil durch das Joch und zum Teil durch den Zahnkranz definiert ist, wobei die Löcher (100) als Durchlass für die Zirkulation von Kühlfluid zur Kühlung des Stators dienen können.

2. Stator nach dem vorhergehenden Anspruch, wobei die ersten Reliefs des Zahnkranzes auf den Zähnen angeordnet sind, insbesondere an deren dem Joch zugewandten Ende.

3. Stator nach einem der vorhergehenden Ansprüche, wobei das Joch (29) dritte Reliefs (60) umfasst, die auf der Innenfläche des Jochs angeordnet sind, gegenüber den Nuten des Zahnkranzes.

4. Stator nach dem vorhergehenden Anspruch, wobei die ersten Reliefs (40) des Zahnkranzes aus dem Schneiden der dritten Reliefs (60) des Jochs resultieren.

5. Stator nach einem der vorhergehenden Ansprüche, wobei die Nuten in der Nähe des Jochs abgerundete Ecken (92) aufweisen.

6. Stator nach einem der vorhergehenden Ansprüche, wobei die ersten und zweiten Reliefs jeweils je einen Krümmungsmittelpunkt aufweisen, wobei der Krümmungsmittelpunkt der ersten Reliefs bezüglich des Krümmungsmittelpunktes der zweiten Reliefs zur Drehachse der Maschine hin versetzt ist.

7. Stator nach einem der vorhergehenden Ansprüche, wobei die ersten und/oder die zweiten Reliefs eine Form eines Scheibenabschnitts aufweisen, der sich insbesondere mit einer Winkelausdehnung von ungefähr 180° erstrecken kann, oder mit einer Winkelausdehnung von mehr als 180°, besser von mehr als 210° oder sogar mehr als 240°.

8. Stator nach einem der vorhergehenden Ansprüche, wobei die zweiten Reliefs eine Form von Vertiefungen aufweisen, in denen die Enden der Zähne angeordnet sind.

9. Stator nach einem der vorhergehenden Ansprüche, wobei die ersten und zweiten Reliefs derart gestaltet sind, dass die Grenzfläche zwischen dem Zahnkranz und dem Joch eine gewellte Form (99) aufweist.

10. Stator nach einem der vorhergehenden Ansprüche, wobei die ersten und zweiten Reliefs eine Schwalbenschwanz- und Zapfenlochform oder Form eines in einen Käfig eingesetzten Schlüssels aufweisen.

11. Stator nach einem der vorhergehenden Ansprüche, wobei Löcher (100) an der Grenzfläche zwischen dem Zahnkranz und dem Joch ausgebildet sind.

12. Stator nach einem der vorhergehenden Ansprüche, wobei wenigstens ein Teil der Materialbrücken (27) wenigstens einen verformbaren Bereich (32) aufweist, der sich bei der Anbringung des Jochs (29) auf dem Zahnkranz (25) verformen kann, wobei die Materialbrücken (27) insbesondere während des Betriebs der Maschine magnetisch gesättigte Bereiche aufweisen können, insbesondere Bereiche von geringerer Breite.

13. Stator nach einem der vorhergehenden Ansprüche, wobei die Nuten (21) wenigstens einen ebenen Abschnitt (30) aufweisen, an dem die Wicklungen (22), vorzugsweise mit einem im Wesentlichen rechteckigen Querschnitt, anliegen.

14. Stator nach einem der vorhergehenden Ansprüche, wobei die Wicklungen (22) jeweils wenigstens einen elektrischen Leiter (34) mit einer im Querschnitt rechteckigen Form umfassen.

15. Verfahren zur Herstellung eines Stators nach einem der Ansprüche 1 bis 14, wobei der Zahnkranz und das Joch gleichzeitig in demselben Blech durch einen einzigen Schnittvorgang zugeschnitten werden und anschließend der Zahnkranz und das Joch zusammengebaut werden, nachdem das Joch und der Zahnkranz relativ zueinander winkelversetzt wurden, um zu bewirken, dass die ersten und zweiten Reliefs zusammenwirken.

## Claims

1. Stator (2) for a rotary electrical machine (1), comprising:
- a radially interior ring (25) comprising teeth (23) and slots (21) which are open radially toward the outside, extending between the teeth, bridges of material (27) connecting two adjacent teeth at their base, and defining the bottom of the slot between these teeth, and
- a radially exterior yoke (29), attached in contact with the ring, the ring and the yoke respectively exhibiting first (40) and second (50) reliefs collaborating with one another and/or with one or more inserts, and
- windings (22) placed in a distributed fashion in the slots,
the stator comprising holes (100) created at the interface between the ring and the yoke, a hole (100) being defined partly by the yoke and partly by the ring, the holes (100) being able to serve for the passage of a flow of cooling fluid for cooling the stator.

2. Stator according to the preceding claim, the first reliefs belonging to the ring being situated on the teeth, notably at their end facing the yoke.

3. Stator according to either one of the preceding claims, the yoke (29) comprising third reliefs (60) situated on the interior surface of the yoke, facing the slots of the ring.

4. Stator according to the preceding claim, the first reliefs (40) belonging to the ring being the result of the cutting-out of the third reliefs (60) belonging to the yoke.

5. Stator according to any one of the preceding claims, the slots having rounded corners (92) in the vicinity of the yoke.

6. Stator according to any one of the preceding claims, the first and second reliefs respectively each having a centre of curvature, the centre of curvature of the first reliefs being offset toward the axis of rotation of the machine with respect to the centre of curvature of the second reliefs.

7. Stator according to any one of the preceding claims, the first and/or the second reliefs adopting the shape of a portion of a disc, which notably may extend over an angular extent of around 180°, or over an angular extent greater than 180°, and better still greater than 210°, or even greater than 240°.

8. Stator according to any one of the preceding claims, the second reliefs having the form of an indentation in which the ends of the teeth are situated.

9. Stator according to any one of the preceding claims, the first and second reliefs being configured in such a way that the interface between the ring and the yoke has an undulating shape (99).

10. Stator according to any one of the preceding claims, the first and second reliefs having a dovetail and mortice shape, or the shape of a key inserted in a cage.

11. Stator according to any one of the preceding claims, holes (100) being created at the interface between the ring and the yoke.

12. Stator according to any one of the preceding claims, at least a part of the bridges of material (27) exhibiting at least one deformable zone (32) capable of deforming as the yoke (29) is mounted on the ring (25), the bridges of material (27) notably potentially exhibiting zones that are magnetically saturated during the operation of the machine, notably zones of lesser width.

13. Stator according to any one of the preceding claims, the slots (21) having at least one planar portion (30) against which the windings (22), preferably of substantially rectangular cross section, bear.

14. Stator according to any one of the preceding claims, the windings (22) each comprising at least one electrical conductor (34) which, in transverse section, is rectangular in shape.

15. Method for manufacturing a stator according to any one of Claims 1 to 14, in which the ring and the yoke are cut out simultaneously from the same metal sheet in a single cutting-out operation, then the ring and the yoke are assembled after having angularly offset the yoke and the ring relative to one another in order to cause the first and second reliefs to collaborate with one another.
